(19) Europäisches Patentamt
European Patent Office
Office européen des brevets

(11) **EP 4 001 656 A1**

(12) **EUROPÄISCHE PATENTANMELDUNG**

(43) Veröffentlichungstag:
**25.05.2022   Patentblatt 2022/21**

(21) Anmeldenummer: **21206219.4**

(22) Anmeldetag: **03.11.2021**

(51) Internationale Patentklassifikation (IPC):
**F04D 15/00** (2006.01)    **F24D 19/10** (2006.01)

(52) Gemeinsame Patentklassifikation (CPC):
**F04D 15/0088;** F05D 2260/85; F24D 19/1012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.11.2020   LU 102210**

(71) Anmelder: **WILO SE**
**44263 Dortmund (DE)**

(72) Erfinder:
• **Fiedler, Jens Olav**
**44263 Dortmund (DE)**

• **Graurock, David**
**44263 Dortmund (DE)**
• **Rotter, Alexander**
**44263 Dortmund (DE)**
• **Stroobant, Philippe**
**44263 Dortmund (DE)**
• **Robin, Laurent**
**44263 Dortmund (DE)**

(74) Vertreter: **Wißgott, Torben**
**Cohausz Hannig Borkowski Wißgott**
**Patentanwaltskanzlei GbR**
**Schumannstraße 97-99**
**40237 Düsseldorf (DE)**

(54) **VERFAHREN ZUR BESTIMMUNG EINER BETRIEBSINFORMATION AUS DER STARTENERGIE EINER KREISELPUMPE UND ZUGEHÖRIGE KREISELPUMPE**

(57)    Die Erfindung betrifft ein Verfahren zur Bestimmung wenigstens einer Betriebsinformation einer elektromotorischen Kreiselpumpe in einem hydraulischen System oder dieses hydraulischen Systems, insbesondere einem Heizung- oder Kühlsystem, mit zumindest einem Verbraucher, zu dem die Kreiselpumpe im Normalbetrieb ein Fluid fördert, wobei die Kreiselpumpe zunächst in einer Anlaufphase (A) von der Drehzahl Null aus gesteuert hochläuft und anschließend in einen drehzahlgeregelten Betrieb (B) übergeht. Dabei wird die während der Anlaufphase (A) von dem Elektromotor der Kreiselpumpe aufgenommene Startenergie ($W$) durch Integration der elektrischen Leistungsaufnahme des Elektromotors bestimmt und daraus die Betriebsinformation ermittelt.

Fig. 7

EP 4 001 656 A1

**Beschreibung**

Die Erfindung betrifft allgemein ein Verfahren zur Gewinnung von Informationen aus dem Betrieb einer Kreiselpumpe unmittelbar nach ihrem Einschalten.

Im Besonderen betrifft die Erfindung ein Verfahren zur Bestimmung wenigstens einer Betriebsinformation einer elektromotorischen Kreiselpumpe in einem hydraulischen System oder dieses hydraulischen Systems, insbesondere einem Heizung- oder Kühlsystem, mit zumindest einem Verbraucher, zu dem die Kreiselpumpe im Normalbetrieb ein Fluid fördert. Dabei läuft die Kreiselpumpe zunächst in einer Anlaufphase von der Drehzahl Null aus gesteuert hoch und geht anschließend in einen drehzahlgeregelten Betrieb über. Es wird somit zwischen einer Hochlaufphase einerseits, in der die Kreiselpumpe nicht geregelt wird, und einer sich daran anschließenden Betriebsphase unterschieden, in der sie geregelt, insbesondere drehzahlgeregelt wird.

Die Erfindung betrifft ferner eine elektromotorische Kreiselpumpe zur Förderung des Fluids zu einem Verbraucher in dem hydraulischen System mit einer Pumpenelektronik zur Drehzahlregelung des Elektromotors und zur Ausführung des Verfahrens.

Untersuchungen haben gezeigt, dass das von einer Kreiselpumpe zu überwindende Lastmoment von einer Vielzahl unterschiedlicher Faktoren beeinflusst wird, die sich gegenseitig überlagern. Im Umkehrschluss bedeutet dies, dass aus dem Lastmoment eine Vielzahl an Informationen gewonnen werden kann, die eine Aussage über den Betrieb der Kreiselpumpe und/ oder des Systems zulassen, in dem die Kreiselpumpe arbeitet.

Bei Kreiselpumpen gilt die folgende Differentialgleichung für rotatorische Bewegungen:

$$\sum M = M_{Motor,shaft} - M_{Load} = J\frac{d\omega}{dt}$$

wobei

| | |
|---|---|
| $M_{Motor,shaft}$ | das von der Kreiselpumpe aufgebrachte Drehmoment an der Pumpenwelle, |
| $M_{Load}$ | das Lastmoment |
| $J$ | das Trägheitsmoment und |
| $\omega$ | die Drehgeschwindigkeit der Welle ist. |

Im Lastmoment $M_{Load}$ sind sowohl mechanische Reibkomponenten, als auch hydraulische Komponenten wie die Fluidreibung, die kinetische Energie des Fördermediums etc. enthalten. So ist dieses Lastmoment $M_{Load}$ im allgemeinen neben der Drehzahl n (=$2\pi\omega$) auch von Eigenschaften des geförderten Mediums wie der Temperatur, der Viskosität oder des Volumenstroms, sowie von Eigenschaften der Kreiselpumpe abhängig, wie z.B. dem Reibkoeffizienten für die Lagerreibung, der gegebenenfalls veränderlich ist infolge Alterung oder Abnutzung.

Aus der Größe des Lastmoments $M_{Load}$ kann auf eine oder mehrere dieser Eigenschaften geschlossen werden, wobei eine Herausforderung darin besteht, die Überlagerung verschiedener Effekte zu unterscheiden bzw. einen bestimmten Effekt im Lastmoment einer der genannten Eigenschaften qualitativ oder sogar quantitativ zuzuordnen.

In der Praxis kann das Lastmoment $M_{Load}$ nicht direkt ermittelt werden. Auch stehen das Wellenmoment oder die Wellenleistung meist nicht zur Verfügung, vor allem bei kleinen Drehzahlen, sei es, weil Pumpenantriebe aus Kostengründen häufig keinen Drehmomentsensor besitzen oder weil der dem Motormoment proportionale q-Strom im Falle einer feldorientierten Regelung der elektromotorischen Kreiselpumpe während der rein drehzahlgesteuerten Anlaufphase noch nicht zur Verfügung steht. Pumpenantriebe werden aus Kostengründen häufig auch ohne Rotorpositionsgeber aufgebaut. Somit ist eine feldorientierte Regelung bei geringen Drehzahlen häufig nicht ohne weiteres möglich.

Es ist Aufgabe der vorliegenden Erfindung ein Verfahren bereitzustellen, das eine indirekte Bewertung des Lastmoments sensorlos durchführt und die Betriebsinformation über die Kreiselpumpe oder das System bereits dann bestimmt, wenn die Kreiselpumpe anläuft, d.h. ihre bestimmungsgemäße Betriebsdrehzahl und den geregelten Betrieb noch nicht erreicht hat.

Diese Aufgabe wird durch das Verfahren nach Anspruch 1 gelöst. Vorteilhafte Weiterbildungen sind in den Unteransprüchen angegeben und werden nachfolgend erläutert.

Erfindungsgemäß ist vorgesehen, dass die während der Anlaufphase von dem Elektromotor der Kreiselpumpe aufgenommene Startenergie durch Integration der elektrischen Leistungsaufnahme des Elektromotors (Motoreingangsleistung) bestimmt und daraus die Betriebsinformation ermittelt wird. Weiterhin ist vorgesehen, dass die Pumpenelektronik eingerichtet ist, das erfindungsgemäße Verfahren auszuführen.

Eine mögliche Betriebsinformation ist beispielsweise

- ein Trockenlauf, d.h. es ist kein Fluid in der Kreiselpumpe,
- der Volumenstrom der Kreiselpumpe,
- eine Schwergängigkeit der Kreiselpumpe z.B. in Folge Alterung, Ablagerungen etc. oder
- eine Änderung der Fluideigenschaften, z.B. der Viskosität oder Temperatur.

Die Verwendung der Motoreingangsleistung zur indirekten Bewertung des Lastmoments ist vorteilhaft, da diese aufgrund der in der Kreiselpumpe ohnehin vorhandenen Strom- und Spannungssensoren auf einfache Weise ermittelt werden kann oder sogar bereits aufgrund anderweitiger Verwendung bei der Regelung oder Steuerung der Kreiselpumpe vorliegt und die Leistung proportional zum Produkt aus Drehmoment und Drehzahl ist:

$$P_{Motor,shaft} = M_{Motor,shaft} \cdot \omega$$

Darin ist $P_{Motor,shaft}$ die mechanische Leistung an der Motorwelle der Kreiselpumpe, $M_{Motor,shaft}$ das Wellenmoment und $\omega$ die Drehfrequenz, bzw. die mit $2\pi$ multiplizierte Drehzahl. Die Motoreingangsleistung $P_{Motor,in}$ ist größer als die Motorwellenleistung $P_{Motor,shaft}$, da Verluste $P_{Loss}$ im Motor und Frequenzumrichter der Kreiselpumpe auftreten, insbesondere Eisen, und Kupferverluste. Es gilt

$$P_{Motor,in} = P_{Motor,shaft} + P_{Loss}$$

Ein Kernaspekt der Erfindung ist es, eine dem Lastmoment $M_{Load}$ entsprechende energetische Größe $W_{Load}$ aus der Integration der Motoreingangsleistung während der Anlaufphase für die Lastmomentbewertung heranzuziehen. Diese energetische Größe $W_{Load}$ braucht allerdings nicht bestimmt zu werden. Da sie Teil der Startenergie ist, genügt deren Bestimmung. Dies wird nachfolgend anhand von Ausführungsbeispielen und der beigefügten Figuren verdeutlicht.

Es zeigen:

Figur 1:   Kurvendiagramme der Stromaufnahme und der Drehzahl bei einer Anlaufphase (Startvorgang) der Kreiselpumpe mit gesteuertem Hochfahren

Figur 2:   ein Histogramm für die Startenergie bei verschiedenen Betriebsfällen der Kreiselpumpe einschließlich Trockenlauf

Figur 3:   Diagramme für die Startenergie bei verschiedenen Ventilpositionen

Figur 4:   ein Diagramm für die Startenergie bei verschiedenen Ventilpositionen und Temperaturen

Figur 5:   ein Histogramm für die alters- und verschleißbedingte Änderung der Startenergie

Figur 6:   eine Darstellung der alters- und verschleißbedingten Änderung der Startenergie über der Zeit

Figur 7:   Mögliche Kategorien von Warnungsmeldungen oder Statusanzeigen in Abhängigkeit der Startenergie

Figur 8:   Beispielhafte Leistungskurven

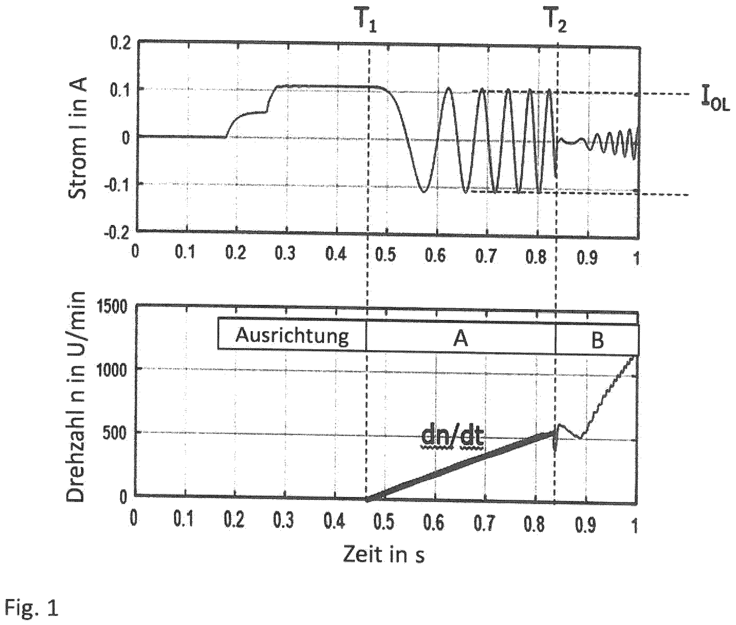

In Figur 1 sind der Verlauf des Stroms I (oberes Diagramm) in einer Phase des Elektromotors einer Kreiselpumpe und der Drehzahl n (unteres Diagramm) für einen Startvorgang der Kreiselpumpe bei einem beliebigen Lastmoment $M_{Load}$ dargestellt. Ein höheres oder geringeres Lastmoment $M_{Load}$ würde identische Diagramme zur Folge haben. Zentraler Abschnitt des Startvorgangs ist die Anlaufphase A, in der die Motorwelle und das damit verbundene Laufrad der Kreiselpumpe gemäß einer definierten Beschleunigungsfunktion beschleunigt werden.

Die Beschleunigung der Kreiselpumpe in der Anlaufphase A erfolgt mit einer definierten Beschleunigungsfunktion, die identisch ist mit einer Beschleunigungsfunktion, die zuvor, insbesondere werksseitig oder im kundenseitigen Betrieb, zur Gewinnung von Vergleichswerten für die Startenergie verwendet wurde. In einer Ausführungsvariante kann auch vorgesehen sein, dass die Beschleunigung stets, d.h. bei jedem Startvorgang mit derselben Beschleunigungsfunktion erfolgt, damit die Startenergien aller Startvorgänge der Kreiselpumpe miteinander verglichen werden können.

Die Anlaufphase A beginnt zum Zeitpunkt $T_1$ bei der Frequenz null und endet mit dem Erreichen einer vorbestimmten Zielfrequenz zum Zeitpunkt $T_2$. Die Differenz $T_2 - T_1$ bildet die Beschleunigungszeit T. Diese beträgt in dem Beispiel etwa 550 U/min. Sie kann jedoch auch größer oder kleiner sein. Es handelt sich bei der Anlaufphase A um einen rein frequenzgesteuerten Betrieb der Kreiselpumpe (Open Loop), d.h. die Drehzahl wird nicht in einem geschlossenen Regelkreis geregelt (Closed Loop).

Vor der Anlaufphase A erfolgt die magnetische Ausrichtung des Rotors bezogen auf das Statorfeld derart, dass das Rotorfeld und das Statorfeld in dieselbe Richtung zeigen. Dies ist optional und hat den Vorteil, dass der Rotor in eine definierte, stabile Startposition gebracht wird, so dass der Rotor nicht in die falsche Richtung anläuft. Diese Gefahr besteht, wenn er sich in einer zufälligen Lage zum Statorfeld befindet, wenn dieses aufgebaut wird. Die Ausrichtung des Rotors erfolgt in an sich bekannter Weise durch aufeinanderfolgendes Einprägen zweier Statorfeldvektoren. Der Stromverlauf hat hier etwa zum Zeitpunkt 0,18s einen ersten (1. Vektor) und etwa bei 0,26s einen zweiten (2. Vektor) sprunghaften Anstieg. Die Ausrichtung des Rotors endet zum Zeitpunkt $T_1$.

Die Beschleunigungsfunktion in der Anlaufphase A kann zum Beispiel durch die vorgegebene Beschleunigungszeit $T = T_2 - T_1$, einen vorgegebenen Drehzahlverlauf und eine vorgegebene Stromamplitude $I_{OL}$ definiert sein. Der Übergang in den drehzahlgeregelten Betrieb B erfolgt, wenn am Ende der Beschleunigungszeit T die bestimmte Zieldrehzahl erreicht ist. Somit wird zum Zeitpunkt $T_2$ in den drehzahlgeregelten Betrieb B übergegangen bzw. umgeschaltet. Das bedeutet, dass die Drehzahl nach der Anlaufphase A in einem geschlossenen Regelkreis geregelt wird (Closed Loop), beispielsweise mittels einer feldorientierten Regelung. In Ermangelung der hierfür notwendigen Informationen über die Rotorlage kann die feldorientierte Regelung nicht bereits bei der Drehzahl null starten.

Die Änderung der Drehzahl dn/dt ist in der Anlaufphase A gemäß dem Beispiel in Figur 1 konstant, so dass der Drehzahlverlauf während der Anlaufphase A einer Rampe entspricht, was allerdings nicht unbedingt sein muss. Neben dem Parameter Stromamplitude $I_{OL}$ ist die Anlaufphase A in dem Beispiel gemäß Figur 1 folglich durch die Parameter Rampensteilheit bzw. Beschleunigung dn/dt und Rampenzeit bzw. Beschleunigungszeit $T_2 - T_1$ definiert. Gemeinsam bilden diese Parameter einen Parametersatz.

Im Falle eines höheren oder geringeren Lastmoments, als es den Diagrammen in Figur 1 zugrunde liegt, bleiben die Verläufe von Frequenz und Strom unverändert, jedoch ändert sich die elektrische Leistungsaufnahme der Kreiselpumpe während der Anlaufphase A bzw. die hier nicht dargestellte Phasenspannung. Bei Antrieben mit Synchronmaschine folgt die Drehzahl im Wesentlichen der Frequenzvorgabe jedoch fällt die Rotorlage je nach Lastmoment bis zu 90° hinter den gestellten Stromvektor zurück. Falls das Lastmoment höher als das maximale Moment des Motors ist, fällt der Motor außer Tritt und bleibt stehen.

Die Motoreingangsleistung kann aus der Messung von Strom und Spannung, vorzugsweise ausgangsseitig des Frequenzumrichters erfolgen. Durch Integration der Motoreingangsleistung während des Beschleunigungsvorgangs in der Anlaufphase A, d.h. von $T_1$ bis $T_2$, wird die Startenergie W bestimmt. Diese Startenergie W umfasst die in die Kreiselpumpe eingebrachte kinetische Energie $W_{kin}$, die Motorverluste $W_{loss}$ und eine energetische Größe $W_{load}$, die repräsentativ für die Höhe des Lastmoments $M_{load}$ ist. Dies veranschaulicht folgende Gleichung:

$$W = \int_{T1}^{T2} P dt = W_{kin} + W_{loss} + W_{load}$$

Wenn stets dieselbe Beschleunigungsfunktion verwendet wird, d.h. die Beschleunigung stets mit den gleichen Parametern erfolgt (Stromamplitude, Beschleunigungszeit [Rampenzeit] und Beschleunigungsverlauf [Rampensteilheit], kann in guter Näherung und unter Vernachlässigung von Temperaturabhängigkeiten angenommen werden, dass die im Leistungsintegral $\int_{T1}^{T2} P dt$ enthaltenen Größen der kinetischen Energie $W_{kin}$, sowie der Motorverluste $W_{loss}$ immer gleich sind. Aus einer Änderung der Startenergie W, d.h. des Werts des Leistungsintegrals $\int_{T1}^{T2} P dt$, kann somit auf eine Änderung der Größe $W_{load}$ und damit auf eine Änderung des Lastmoments $M_{load}$ geschlossen werden. Mit anderen Worten ist anhand der Startenergie W erkennbar, dass sich bei dem Betrieb der Kreiselpumpe im hydraulischen System etwas verändert hat, d.h. entweder bei der Kreiselpumpe selbst oder in dem System, in dem die Kreiselpumpe das Fluid fördert. Dies Änderung wird durch die Änderung des $W_{load}$-Wertes repräsentiert. Wie bereits angesprochen, bedarf es jedoch keiner numerischen Berechnung dieses Werts $W_{load}$, da die erfolgte Veränderung seitens der Kreiselpumpe oder des hydraulischen Systems anhand der Startenergie W erkennbar ist. Dies wird anhand der folgenden Beispiele deutlich.

Gemäß einer ersten Ausführungsvariante des Verfahrens ist die Betriebsinformation eine Information über einen Trockenlauf der Kreiselpumpe, wobei auf diesen Trockenlauf geschlossen wird, wenn die Startenergie W unterhalb einem Referenzwert $W_{Dry}$ liegt.

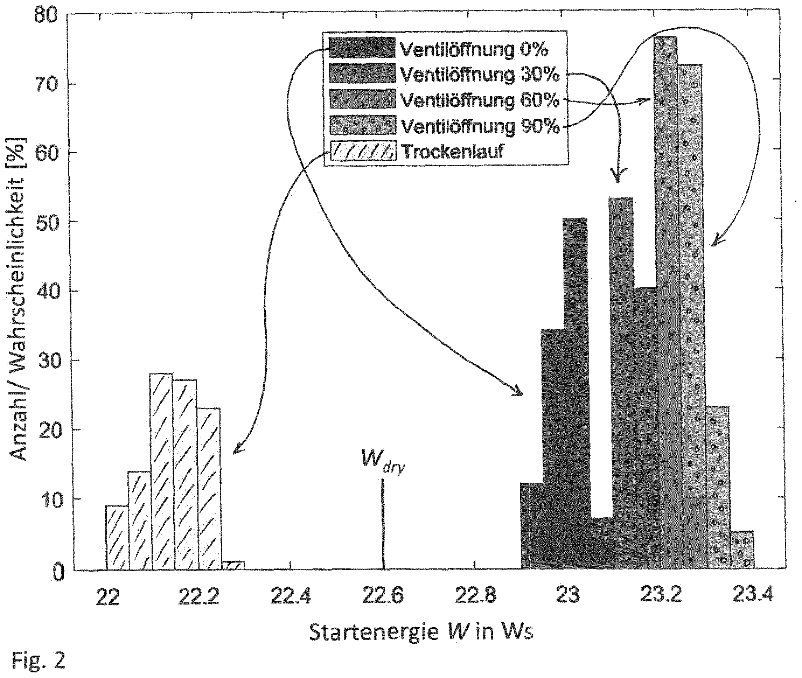

Im Falle eines Trockenlaufs wird keine kinetische Energie für die Beschleunigung von Fluid in der Kreiselpumpe aufgebracht, da dieses teilweise oder ganz fehlt. Die Startenergie W liegt daher in diesem Fall deutlich unter denjenigen Startenergien W, die sich im Betrieb mit Fluid in der Kreiselpumpe bei verschiedenen Öffnungsgraden der Ventile im hydraulischen System oder mit anderen Worten bei verschiedenen Volumenströmen der Kreiselpumpe ergeben. Dies veranschaulicht Figur 2.

Figur 2 zeigt in Form eines Histogramms beispielhaft, wie viele Starts der Kreiselpumpe für unterschiedliche Betriebszustände, genauer gesagt für verschiedene Ventilöffnungsgrade einerseits und Trockenlauf andererseits, einen bestimmten Wert für die Startenergie W geliefert haben. Die Startenergien wurden an einem Prüfstand ermittelt, bei dem sich die Kreiselpumpe in einem hydraulischen Kreis mit einem einzigen Ventil (Absperrklappe, Schieber, Kugelventil oder dergleichen) befand, dessen Öffnungsgrad (Ventilstellung) verändert wurde.

Für jeden Betriebszustand wurden 100 Tests durchgeführt, so dass das Histogramm nicht nur die Anzahl, sondern gleichzeitig auch eine Wahrscheinlichkeitsverteilung in % ausdrückt. Die Verteilungen haben jeweils eine Glockenform. Bei dem Ventilöffnungsgrad von 0% ist das Ventil geschlossen. Die Startenergie W lag in diesem Fall bei 12% der Fälle zwischen 22,9 und 22,95 Ws, bei 34% der Fälle zwischen 22,95 und 23,0 Ws, bei 50% der Fälle zwischen 23,0 und 23,05 Ws und bei 4% der Fälle zwischen 23,05 und 23,1 Ws. Bei dem Ventilöffnungsgrad von 90% ist das Ventil fast vollständig geöffnet. Die Startenergie lag in diesem Fall bei 72% der Fälle zwischen 23,25 und 23,3 Ws, bei 22% der Fälle zwischen 23,3 und 23,35 Ws und bei 6% der Fälle zwischen 23,35 und 23,4 Ws. Dies zeigt, dass in Betriebsfällen mit Fluid in der Kreiselpumpe die Startenergie W stets über 22.9 Ws lag, wobei sich der Wert erhöht, je weiter das Ventil geöffnet wurde, d.h. je mehr Volumenstrom fließt oder mit anderen Worten je mehr kinetische Energie das Fluid aufgenommen hat.

Man erkennt in Figur 2 ferner, dass im Falle von Trockenläufen die Startenergie W stets unter 22.3 Ws lag. Es sei angemerkt, dass sämtliche Werte natürlich nur auf eine beispielhafte Kreiselpumpe in einem beispielhaften hydraulischen System bezogen sind und andere Kreiselpumpen oder andere hydraulische Systeme zu anderen Werten führen, zumindest für den Normalbetrieb. Dennoch ist die Erkenntnis allgemeingültig, dass die Startenergie $W$ im Falle eines Trockenlaufs stets geringer ist, als im Normalbetrieb, und dass die Startenergie $W$ im Normalbetrieb umso hoher ist, je höher der hydraulische Widerstand im System ist. Somit kann auf einen Trockenlauf geschlossen werden, wenn die Startenergie W unterhalb einem Referenzwert liegt.

Bei dem Beispiel gemäß Figur 2 kann der Referenzwert $W_{Dry}$ beispielsweise in die Mitte der Histogrammbalkenverteilungen für Trockenlauf und Normalbetrieb gelegt werden, d.h. etwa bei 22.6 Ws liegen. Um einen Trockenlauf mit hoher Sicherheit zu erkennen, kann Referenzwert $W_{Dry}$ auch höher liegen, beispielsweise bei einem Wert, oberhalb welchem alle werksseitig aus Vergleichsversuchen für Ventilstellung 0% ermittelten Startenergien liegen, der jedoch nah an der niedrigsten vorgekommenen Startenergie liegt, z.B. bei 22,8 Ws oder 22,85 Ws. Möchte man vermeiden, dass fälschlicherweise auf einen Trockenlauf geschlossen wird, kann ein Wert verwendet werden, unterhalb welchem alle werksseitig aus Vergleichsversuchen für einen Trockenlauf ermittelten Startenergien liegen, der jedoch sehr nah an der höchsten vorgekommenen Startenergie liegt. In Figur 2 kann dieser Referenzwert $W_{Dry}$ z.B. bei 22,3 Ws sein.

Der große Vorteil dieser Methode liegt darin, dass der Trockenlauf sehr schnell und zuverlässig erkannt werden kann, da nicht abgewartet werden muss, bis die Kreiselpumpe einen stationären Endzustand im geregelten Betrieb B erreicht hat, wo dann gegebenenfalls auf herkömmliche, andere Art und Weise ein Trockenlauf erkannt werden könnte.

Gemäß einer zweiten Ausführungsvariante des Verfahrens ist die Betriebsinformation der hydraulische Widerstand des Systems oder ein Initialwert des zu fördernden Volumenstroms.

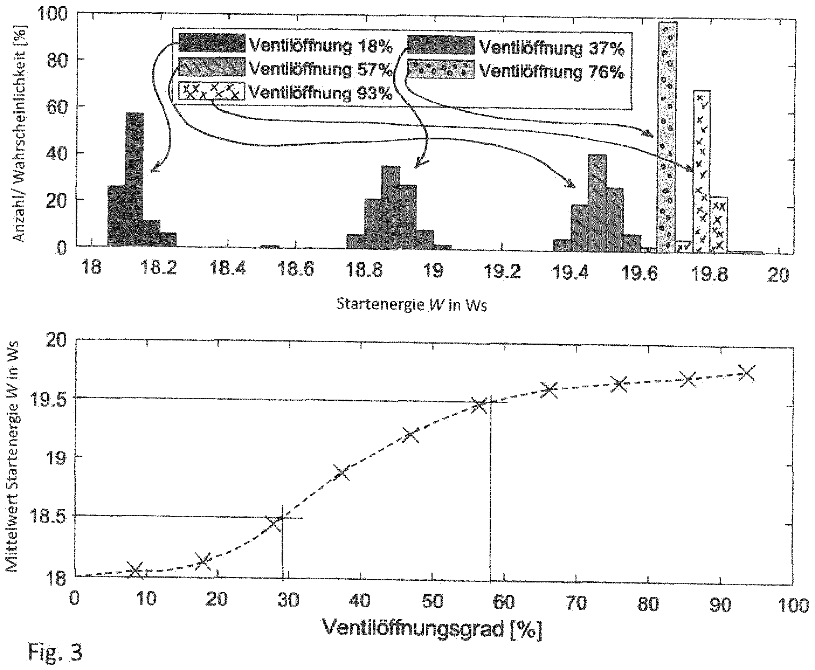

Wie anhand von Figur 2 erläutert, führen unterschiedliche Ventilöffnungsgrade bei identischen Beschleunigungen in der Anlaufphase A zu unterschiedlichen Startenergien, weil der Öffnungsgrad bzw. die Stellung der Ventile im System dessen hydraulischen Widerstand, d.h. die Rohrnetzparabel H(Q) definiert. Dies wird anhand von Figur 3 verdeutlicht.

In Figur 3 ist dargestellt, wie sich die Startenergie W mit dem Ventilöffnungsgrad (Schieberstellung) verändert. Die Startenergien W wurden an einem Prüfstand ermittelt, bei dem sich eine gegenüber dem Beispiel in Figur 2 andere Kreiselpumpe in einem hydraulischen Kreis mit einem einzigen Ventil (Absperrklappe, Schieber, Kugelventil oder dergleichen) befand, dessen Öffnungsgrad (Ventilöffnung bzw. Ventilstellung) verändert wurde. Da der Ventilöffnungsgrad den hydraulischen Widerstand des Rohrleitungsnetzes bestimmt, steht jeder Ventilöffnungsgrad für einen bestimmten hydraulischen Widerstand bzw. eine bestimmte Rohrnetzparabel, genauer gesagt deren Steilheit. Es sei angemerkt, dass bei einem System bzw. hydraulischen Netzwerk mit mehreren Ventilen natürlich nicht nur ein einzelner Ventilöffnungsgrad vorliegt, da alle Ventile ihren eigenen Öffnungsgrad haben. Gleichwohl bestimmen alle Ventile gemeinsam den hydraulischen Widerstand des Systems, d.h. die Steilheit der Rohrnetzparabel, welcher qualitativ als ein Gesamtöffnungsgrad aller Ventile betrachtet werden kann. Insoweit ist das Beispiel in Figur 3 - wie auch das in Figur 2 - allgemeingültig.

Figur 3 zeigt oben in Form eines Histogramms beispielhaft, wie viele Starts der Kreiselpumpe für fünf unterschiedliche Ventilöffnungsgrade welche Startenergie W geliefert haben. Für jeden Ventilöffnungsgrad wurden 100 Tests durchgeführt, so dass das Histogramm nicht nur die Anzahl der Starts mit einer bestimmten Startenergie, sondern gleichzeitig auch eine Wahrscheinlichkeitsverteilung in % ausdrückt.

Bei dem geringsten Ventilöffnungsgrad von ca. 18% liegt die Startenergie W in 28% der Fälle zwischen 18,05 Ws und 18,1 Ws, bei 56% der Fälle zwischen 18,1 Ws und 18,15 Ws, bei 10% der Fälle zwischen 18,15 Ws und 18,2 Ws und bei 6% der Fälle zwischen 18,15 und 18,2 Ws. Bei dem höchsten Ventilöffnungsgrad von ca. 93% liegt die Startenergie W in 4% der Fälle zwischen 19,7 Ws und 19,75 Ws, bei 70% der Fälle zwischen 19,75 Ws und 19,8 Ws, bei 24% der Fälle zwischen 19,8 und 19,85 Ws, bei je 1% der Fälle zwischen 19,85 und 19,9 Ws und zwischen 19,9 und 19,95 Ws. Für die übrigen Ventilöffnungsgrade liegen die Startenergien W zwischen dem genannten minimalen und maximalen Wert und besitzen jeweils eine glockenförmige Verteilung teils beabstandet zu einander, teils mit Überlappung am Rand, wobei die Überlappungen bei dem maximalen Ventilöffnungsgrad am größten sind.

Figur 3 zeigt unten in einem Diagramm eine Zuordnung der mittleren Startenergie W zu einem jeweiligen Ventilöffnungsgrad. Anhand dieser Zuordnung kann einer berechneten Startenergie W ein bestimmter Ventilöffnungsgrad zugeordnet werden. So kann beispielsweise bei einer Startenergie W in Höhe von 18,5 Ws ein Ventilöffnungsgrad von ca. 29% oder bei einer Startenergie W in Höhe von 19,5 Ws ein Ventilöffnungsgrad von ca. 58% angenommen werden.

Da der prozentuale Ventilöffnungsgrad qualitativ den hydraulischen Widerstand des Systems angibt, kann das untere Diagramm in Figur 3 auch als Startenergie W über dem hydraulischen Widerstand in % verstanden werden. Diese Zuordnung kann als Tabelle mit Referenzwerten oder in Form eines funktionalen Zusammenhangs zwischen der Startenergie und dem Widerstand, der eine interpolierte Kurve beschreibt, in der Kreiselpumpe hinterlegt werden. Anhand der Tabelle mit den Referenzwerten kann durch Vergleich der Startenergie W auf den hydraulischen Widerstand geschlossen werden. Dagegen liefert der funktionale Zusammenhang für eine berechnete Startenergie W direkt den zugeordneten hydraulischen Widerstand.

Somit kann die Kreiselpumpe bereits beim Starten in der Anlaufphase A eine qualitative Feststellung über die Höhe des hydraulischen Widerstands, d.h. die Steilheit der Rohrnetzparabel machen und damit auch den Zusammenhang zwischen Förderhöhe und Drehzahl, bzw. Volumenstrom und Drehzahl berechnen. Somit kann aus der Startenergie W ein Initialwert für den Volumenstrom bei Erreichen der Closed Loop Drehzahl abgeleitet werden.

Da das Ergebnis auch von Medieneigenschaften und, wie später noch gezeigt wird, gegebenenfalls von der Alterung der Kreiselpumpe abhängt, ist das Ergebnis mit einer gewissen Unsicherheit behaftet. Es reicht jedoch in jedem Fall aus, um z.B. qualitativ festzustellen, ob die Rohrnetzparabel steil, mittelsteil oder flach ist.

Vorteilhafterweise kann die Information über den hydraulischen Widerstand verwendet werden, um unmittelbar eine geeignete Einstellung der Kreiselpumpe für den drehzahlgeregelten Betrieb B vorzunehmen. So kann in Abhängigkeit von der ermittelten Startenergie W oder dem daraus qualitativ oder quantitativ ermittelten hydraulischen Widerstand z.B. eine Regelungskennlinie für eine volumenstromabhängige Regelung des Differenzdrucks im drehzahlgeregelten Betrieb B festgelegt werden.

Beispielsweise kann für eine Konstantdruckregelung eine höhere Regelungskennlinie oder für eine Proportionaldruckregelung eine höhere und/ oder steilere Regelungskennlinie verwendet werden, wenn die Startenergie W oberhalb einem Referenzwert liegt. Alternativ kann für eine Konstantdruckregelung eine niedrigere Regelungskennlinie oder für eine Proportionaldruckregelung eine niedrigere und/ oder flachere Regelungskennlinie verwendet werden, wenn die Startenergie W unterhalb einem bestimmten Referenzwert liegt. Als Referenzwert kann z.B. ein mittlerer Wert aller werksseitig für die verschiedenen Ventilöffnungsgrade bestimmten Startenergien W verwendet werden. Mit Bezug auf das Beispiel in Figur 3 kann der Referenzwert z.B. 19 Ws betragen.

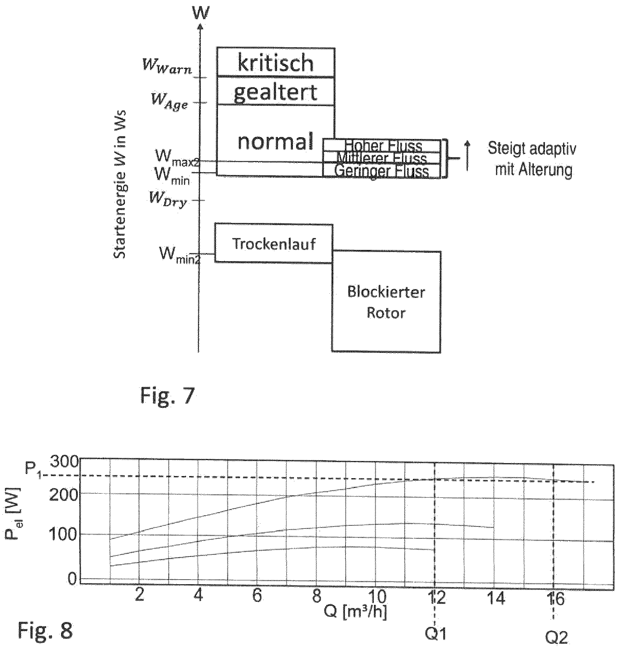

Des Weiteren ermöglicht die Information über den hydraulischen Widerstand im geregelten Betrieb B zu entscheiden, ob die Rohrnetzparabel auf der linken oder rechten Seite der Eindeutigkeitsgrenze einer Leistungskennlinie liegt. Eine Leistungskennlinie $P_{el}(Q)$, wie sie beispielhaft in Figur 8 gezeigt ist, beschreibt den physikalischen Zusammenhang zwischen der elektrischen Leistungsaufnahme $P_{el}$ der Kreiselpumpe und ihrem geförderten Volumenstrom Q. Die Leistung $P_{el}$ steigt zunächst mit dem Volumenstrom Q an, erreicht dann jedoch ein Maximum und fällt bei weiterer Erhöhung des Volumenstrom Q wieder ab. Das bedeutet, dass die Leistungskennlinie P(Q) nicht eindeutig ist, da bei höheren Volumenströmen einer bestimmten Leistungsaufnahme $P_1$ zwei Volumenstromwerte $Q_1$, $Q_2$ zugeordnet werden können, so dass aus der Leistung nicht eindeutig auf den tatsächlichen Volumenstrom geschlossen werden kann. Diese Zweideutigkeit kann durch die frühe Kenntnis des hydraulischen Widerstands bzw. des Initialwerts des Volumenstroms für die Closed Loop-Regelung aufgelöst werden.

Sofern im drehzahlgeregelten Betrieb B der Volumenstrom anhand der elektrischen Leistungsaufnahme des Elektromotors bzw. einer Leistungskennlinie in einem Volumenstrombereich ermittelt wird, in dem der Wert der elektrischen Leistungsaufnahme sowohl einem ersten Volumenstromwert als auch einem zweiten Volumenstromwert zugeordnet ist, der gegenüber dem ersten Volumenstromwert höher ist, kann somit bei dem erfindungsgemäßen Verfahren vorgesehen sein, dass anhand der zuvor ermittelten Startenergie W entschieden wird, ob der erste oder zweite Volumenstromwert richtig ist.

Dies kann beispielsweise dadurch erfolgen, dass die Startenergie W mit einem Referenzwert verglichen wird. In dem Fall, dass die Startenergie W unterhalb des Referenzwerts liegt, der erste Volumenstromwert und in dem Fall, dass die Startenergie W oberhalb des Referenzwerts oder eines weiteren Referenzwerts liegt, der zweite Volumenstromwert ausgewählt wird.

Anstelle der direkten Verwendung der Startenergie W kann auch die zuvor daraus abgeleitete Größe verwendet werden, nämlich z.B. der Ventilöffnungsgrad, der hydraulische Widerstand oder der Initialwert des Volumenstroms.

Somit kann unmittelbar zu Beginn des drehzahlgeregelten Betriebs der Volumenstrom korrekt aus der elektrischen Leistungsaufnahme bestimmt werden.

Gemäß einer dritten Ausführungsvariante des Verfahrens ist die Betriebsinformation die Temperatur des geförderten Fluids.

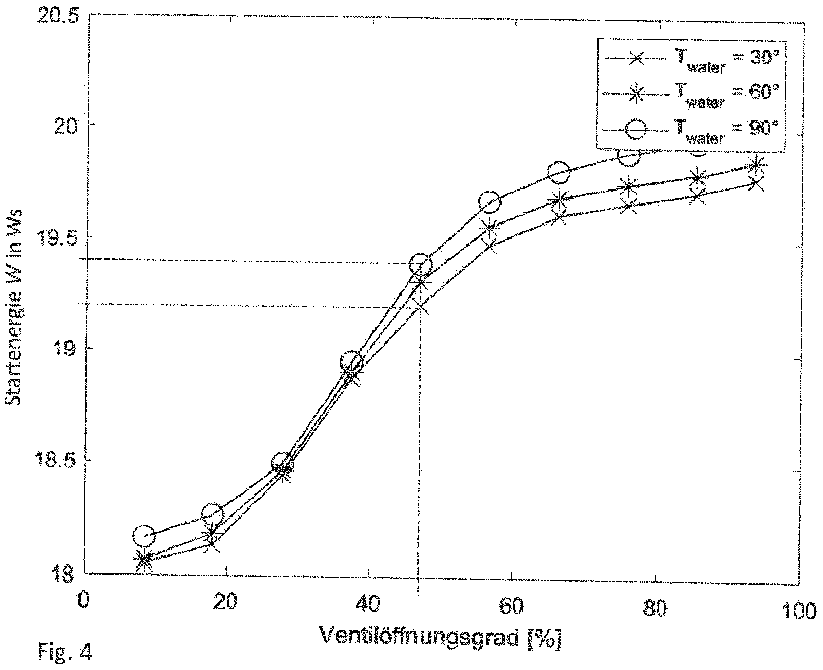

Auch die Medientemperatur hat einen Einfluss auf das Integrationsergebnis. Figur 4 veranschaulicht dies anhand von drei beispielhaften Temperaturen 30°, 60° und 90° und stellt analog zum unteren Diagramm in Figur 3 die Startenergie W bei diesen Temperaturen über dem Ventilöffnungsgrad in % dar. Es zeigt sich, dass die Startenergie W bei jedem betrachteten Ventilöffnungsgrad umso höher ist, je höher die Temperatur ist. Dies ist bedingt durch die Temperaturabhängigkeit der Viskosität des geförderten Fluids, z.B. Wasser. Das bedeutet, dass aus der Startenergie W eine Information über die Temperatur des geförderten Fluids gewonnen werden kann. So hat das Fluid z.B. in einem hydraulischen System mit einem Ventilöffnungsgrad bzw. einem hydraulischen Widerstand von 46% bei einer ermittelten Startenergie W von ca. 19,2 Ws eine Temperatur von ca. 30° und bei ca. 19,4 Ws eine Temperatur von 90°.

Wie Figur 4 zeigt, ist eine solche Auswertung im ganzen Bereich möglich. Eine Bestimmung der Temperatur ist aber nur in einem hydraulischen System mit einer festen Systemkennlinie (konstante Rohrnetzparabel), d.h. einem konstanten hydraulischen Widerstand möglich, da es in diesem Fall kein Ventil gibt, das die Startenergie W beeinflusst. Ein solches hydraulisches System kann z.B. ein Kreislauf mit einem Wärmetauscher sein.

Zur Bestimmung der Fluidtemperatur kann eine Zuordnung der verschiedenen Startenergien $W$ zu den entsprechenden Temperaturen in Form einer Tabelle oder einer mathematischen Funktion in der Kreiselpumpe hinterlegt sein. Anhand dieser Zuordnung kann dann durch Vergleich der ermittelten Startenergie $W$ mit einem oder mehreren der in der Tabelle enthaltenen Referenzwerte oder durch direkte Berechnung anhand der mathematischen Funktion die Temperatur ermittelt werden.

Gemäß einer vierten Ausführungsvariante des Verfahrens ist die Betriebsinformation eine Information über den Verschleißzustand oder Alterungszustand der Kreiselpumpe.

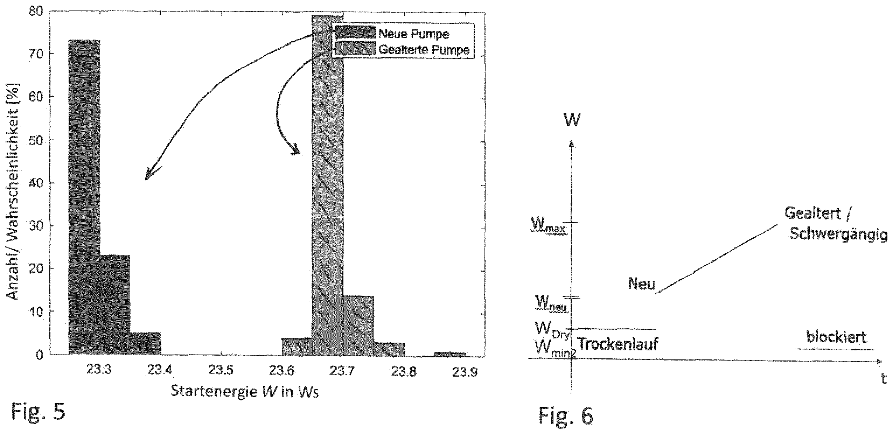

So liegt ein wesentlicher Nutzen der Bestimmung der Startenergie $W$ in der Bestimmung einer Kennzahl zur Quantifizierung der Alterung, insbesondere der Startfähigkeit der Kreiselpumpe. Wie in Figur 5 dargestellt ist, erhöht sich die für die Anlaufphase A notwendige Startenergie im Laufe des Pumpenlebens aufgrund Abnutzung der Lager, erhöhte Reibung z.B. infolge einer Partikelablagerung etc. So liegen bei dem in Figur 5 dargestellten Fall die Werte der Startenergie $W$ bei einer beispielhaften neuen Kreiselpumpe stets unter 23,4 Ws. Im Vergleich dazu liegen die Werte der Startenergie bei einer gealterten Kreiselpumpe über 23,6 Ws.

Wie Figur 6 veranschaulicht, kann es sogar dazu kommen, dass die Startenergie $W$ infolge der Alterung der Pumpe bis zu einem Maximalwert $W_{max}$ ansteigt, ab dem die Kreiselpumpe aufgrund eines zu geringen Startmoments nicht mehr starten kann und "blockiert". Dies ist in Figur 6 veranschaulicht. Allerdings liegt die Startenergie $W$ nach Erreichen des Maximalwerts $W_{max}$ bei einem minimalen Wert $W_{min2}$, der unterhalb der Trockenlaufgrenze $W_{Dry}$ liegt, weil der Rotor bei einer "Blockade" bzw. einem Fehlstart nicht dreht und in der Anlaufphase A nur die elektrischen Verluste gedeckt werden. Rein beispielhaft ist in Figur 6 ein linearer Anstieg der Startenergie $W$ von $W_{neu}$ bis $W_{max}$ über der Zeit angenommen ist.

Somit kann die Startenergie $W$ genutzt werden, um einen zunehmenden Verschleiß zu erkennen. Vorzugsweise ist zur Bewertung des Verschleiß- oder Alterungszustandes vorgesehen, dass das Verhältnis der ermittelten Startenergie $W$ zu einem Referenzwert ermittelt und aus diesem Verhältnis auf den Verschleiß- oder Alterungszustand geschlossen wird. Das Verhältnis bildet quasi ein Maß für den Verschleiß- oder Alterungszustand

Bei dem Referenzwert kann es sich beispielsweise um den Wert $W_{neu}$ derjenigen Startenergie $W$ handeln, der typischerweise bei neuen Kreiselpumpe im Auslieferungszustand vorliegt. Dieser Referenzwert kann werksseitig ermittelt und in der Kreiselpumpe hinterlegt sein. Alternativ kann die Startenergie $W$ bei der ersten Inbetriebnahme der Kreiselpumpe in dem hydraulischen System bestimmt und als Referenzwert abgespeichert werden. Ferner kann aus mehreren Starts (z.B. zwischen 5 und 50) nach der Installation der Kreiselpumpe jeweils die Startenergie $W$ ermittelt und aus diesen Werten dann ein Mittelwert gebildet werden, der als Referenzwert abgespeichert wird.

Alternativ kann der Referenzwert dem Wert $W_{max}$ derjenigen Startenergie $W$ entsprechen, ab dem ein Pumpenstart fehlschlägt. Dieser Referenzwert kann ebenfalls werksseitig ermittelt und in der Kreiselpumpe hinterlegt sein.

Das Verhältnis der ermittelten Startenergie $W$ zu dem Referenzwert kann durch die Differenz dieser Werte oder durch deren Quotienten gebildet sein. Es bildet dann das Maß für den Verschleiß- oder Alterungszustand und kann im Betrieb des Kreiselpumpenaggregats, insbesondere bei jedem Start berechnet werden.

Vorzugsweise kann vorgesehen sein, dass ab einem bestimmten Wert $W_{Age}$, $W_{Warn}$ der Startenergie $W$ oder des Verhältnisses eine Warn- oder Wartungsmeldung ausgegeben wird. Dies veranschaulicht Figur 7 anhand eines Ampelsystems (normal, gealtert, kritisch), bei dem ab einem ersten Referenzwert $W_{Age}$ für die Startenergie $W$ eine Alterung der Kreiselpumpe und ab einem zweiten, zum ersten Wert höheren Referenzwert $W_{Warn}$ ein kritisches Betriebsalter angenommen wird.

Gemäß einer fünften Ausführungsvariante des Verfahrens ist die Betriebsinformation eine Information über einen Fehlstart der Kreiselpumpe. Ein Fehlstart liegt vor, wenn die Kreiselpumpe so schwergängig geworden ist, dass das erzeugte Antriebsmoment nicht ausreicht, um den Rotor zu drehen. Dies kann durch Verschleiß oder Partikel bedingt sein, die ein rotierendes Teil der Pumpe blockieren. Wenn der Pumpenstart fehlschlägt, ist die Startenergie $W$ geringer, als bei einem Normalstart, weil die Drehzahl in der Anlaufphase A null ist und die aufgenommene elektrische Energie nur noch die elektrischen Verluste deckt. Ein Fehlstart kann angenommen werden, wenn die Startenergie $W$ einen Referenzwert $W_{min2}$ unterschreitet, wie dies in Figur 7 dargestellt ist.

Figur 7 veranschaulicht, dass ein Trockenlauf und ein blockierter, d.h. derart schwergängiger Rotor, dass er nicht anlaufen kann, jeweils zu Startenergien $W$ innerhalb eines bestimmten Intervalls führt, die beide unterhalb der Entscheidungsschwelle bzw. dem Referenzwert $W_{Dry}$ für Trockenlauf liegen. Somit würde die Feststellung einer Startenergie $W$ kleiner $W_{Dry}$ nicht eindeutig auf einen Trockenlauf schließen lassen, weil auch ein blockierter Rotor vorliegen kann. Es ist deshalb sinnvoll, die Startenergie zusätzlich zu dem Vergleich mit dem Trockenlaufreferenzwert $W_{Dry}$ daraufhin zu prüfen, ob sie oberhalb eines weiteren Referenzwerts $W_{min2}$ liegt, unterhalb welchem der Fall eines blockierten Rotors vorliegt. Mit anderen Worten wird zur Feststellung eines Trockenlaufs geprüft, ob die Startenergie $W$ zwischen $W_{min2}$ und $W_{Dry}$ liegt.

Für den Fall, dass sich die beiden Intervalle für Trockenlauf und blockierter Rotor bei einer Kreiselpumpe überlappen, kann die Feststellung eines Trockenlaufs allein anhand des Vergleichs der Startenergie $W$ mit dem Trockenlaufreferenzwert $W_{Dry}$ sowie einer weiteren Pumpengröße erfolgen, die eine Aussage über einen blockierten Rotor zulässt. Beispielsweise kann hierfür im Closed Loop Betrieb B die Höhe und/ oder Frequenz der in den Stator rückinduzierten Spannung (Back EMF) herangezogen werden, die im Falle eines blockierten Rotors null ist.

In einer weiteren Ausführungsvariante kann vorgesehen sein, dass die Kreiselpumpe unmittelbar nach der Anlaufphase wieder ausgeschaltet wird, wenn die Startenergie $W$ innerhalb einem Erwartungsbereich liegt, der einem Normalbetrieb mit geringem Volumenstrom zugeordnet ist. Dieser Erwartungsbereich ist in Figur 7 nach unten hin durch einen unteren Grenzwert $W_{min}$ und nach oben hin durch einen oberen Grenzwert $W_{max2}$ begrenzt, wobei der untere Grenzwert $W_{min}$ bezüglich des Volumenstroms die untere Grenze des Normalbetriebs markiert. Liegt die Startenergie $W$ in diesem Erwartungsbereich, ist die Systemkennlinie (Rohrnetzparabel) vergleichsweise steil und es liegt ein sehr kleiner Volumenstrom vor, d.h., dass die Kreiselpumpe eigentlich nicht gebraucht wird. Somit kann sie nach dieser Erkenntnis wieder abgeschaltet werden bzw. sie kann sich abschalten.

Sämtliche vorgenannten Werte, Referenzwerte und Grenzwerte für die Startenergie $W$ beziehen sich auf dieselbe bestimmte Anlaufphase A der Kreiselpumpe, wie sie beispielhaft in Figur 1 gezeigt ist. Die Werte der Startenergie $W$ sind also nur für einen bestimmten Parametersatz gültig, der die Anlaufphase A definiert, beispielsweise für einen aus Beschleunigungsverlauf dn/dt (Rampensteilheit), Beschleunigungszeit T und Stromamplitude $I_{OL}$ definierten Parametersatz. In der Kreiselpumpe können jedoch zwei oder mehr verschiedene solcher Parametersätze hinterlegt sein, die je nach Bedarf von der Kreiselpumpe verwendet werden, z.B. ein erster Parametersatz für einen "Normalstart" (kleiner Strom, kurze Rampe) und ein zweiter Parametersatz für einen "Blockierstart" (hoher Strom, lange Rampe), der im Falle einer schwergängigen Kreiselpumpe verwendet wird, beispielsweise nachdem ein Normalstart mit dem ersten Parametersatz missglückte. In einer Ausführungsvariante können jedem der Parametersätze eigene Referenzwerte und Grenzwerte für die Startenergie $W$ zugeordnet sein und je nach Verwendung des ersten oder zweiten Parametersatzes geladen und zur Durchführung des erfindungsgemäßen Verfahrens verwendet werden.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

**Patentansprüche**

1. Verfahren zur Bestimmung wenigstens einer Betriebsinformation einer elektromotorischen Kreiselpumpe in einem hydraulischen System oder dieses hydraulischen Systems, insbesondere einem Heizung- oder Kühlsystem, mit zumindest einem Verbraucher, zu dem die Kreiselpumpe im Normalbetrieb ein Fluid fördert, wobei die Kreiselpumpe zunächst in einer Anlaufphase (A) von der Drehzahl Null aus gesteuert hochläuft und anschließend in einen drehzahlgeregelten Betrieb (B) übergeht, **dadurch gekennzeichnet, dass** die während der Anlaufphase (A) von dem Elektromotor der Kreiselpumpe aufgenommene Startenergie ($W$) durch Integration der elektrischen Leistungsaufnahme des Elektromotors bestimmt und daraus die Betriebsinformation ermittelt wird.

2. Verfahren nach Anspruch 1, **dadurch gekennzeichnet, dass** die Beschleunigung der Kreiselpumpe in der Anlaufphase (A) mit einer definierten Beschleunigungsfunktion erfolgt, die identisch ist mit einer Beschleunigungsfunktion, die zuvor zur Gewinnung von Vergleichswerten für die Startenergie ($W$) verwendet wurde.

**3.** Verfahren nach Anspruch 2, **dadurch gekennzeichnet, dass** die Beschleunigungsfunktion durch eine vorgegebene Beschleunigungszeit (T), einen vorgegebenen, insbesondere konstanten Beschleunigungsverlauf und eine vorgegebene Stromamplitude ($I_{OL}$) definiert ist, wobei am Ende der Beschleunigungszeit (T) eine bestimmte Zieldrehzahl erreicht ist.

**4.** Verfahren nach einem der vorherigen Ansprüche, **dadurch gekennzeichnet, dass** die Betriebsinformation eine Information über einen Trockenlauf der Kreiselpumpe ist, wobei auf diesen Trockenlauf geschlossen wird, wenn die Startenergie (W) einen Referenzwert ($W_{Dry}$) unterschreitet.

**5.** Verfahren nach einem der vorherigen Ansprüche, **dadurch gekennzeichnet, dass** die Betriebsinformation eine Information über den hydraulischen Widerstand des Systems oder ein Initialwert des zu fördernden Volumenstroms ist.

**6.** Verfahren nach Anspruch 5, **dadurch gekennzeichnet, dass** der Widerstand aus einem hinterlegten funktionalen Zusammenhang zwischen der Startenergie (W) und dem Widerstand oder durch Vergleich der Startenergie (W) mit Referenzwerten einer Tabelle erfolgt, die verschiedene Startenergien (W) den entsprechenden Widerständen zuordnet.

**7.** Verfahren nach Anspruch 5 oder 6, **dadurch gekennzeichnet, dass** in Abhängigkeit von der Startenergie (W) oder dem ermittelten Widerstand eine Regelungskennlinie für eine Regelung des Differenzdrucks im drehzahlgeregelten Betrieb (B) festgelegt wird.

**8.** Verfahren nach Anspruch 7, **dadurch gekennzeichnet,**

   **dass** für eine Konstantdruckregelung eine höhere Regelungskennlinie oder für eine Proportionaldruckregelung eine höhere und/ oder steilere Regelungskennlinie verwendet wird, wenn die Startenergie (W) oberhalb einem Referenzwert liegt, oder
   **dass** für eine Konstantdruckregelung eine niedrigere Regelungskennlinie oder für eine Proportionaldruckregelung eine niedrigere und/ oder flachere Regelungskennlinie verwendet wird, wenn die Startenergie (W) unterhalb einem Referenzwert liegt.

**9.** Verfahren nach einem der vorherigen Ansprüche, **dadurch gekennzeichnet, dass** im drehzahlgeregelten Betrieb (B) der Volumenstrom anhand der elektrischen Leistungsaufnahme des Elektromotors in einem Volumenstrombereich ermittelt wird, in dem der Wert der elektrischen Leistungsaufnahme sowohl einem ersten Volumenstromwert als auch einem zweiten Volumenstromwert zugeordnet ist, der gegenüber dem ersten Volumenstromwert höher ist, und dass anhand der Startenergie (W) oder einer daraus abgeleiteten Größe durch deren Vergleich mit wenigstens einem Referenzwert entschieden wird, ob der erste oder zweite Volumenstromwert richtig ist.

**10.** Verfahren nach einem der vorhergehenden Ansprüche, **dadurch gekennzeichnet, dass** die Betriebsinformation die Temperatur des geförderten Fluids ist und diese anhand einer hinterlegen Zuordnung der verschiedenen Startenergien (W) zu den entsprechenden Temperaturen in Form einer Tabelle oder einer mathematischen Funktion ermittelt wird.

**11.** Verfahren nach einem der vorhergehenden Ansprüche, **dadurch gekennzeichnet, dass** die Betriebsinformation eine Information über den Verschleiß- oder Alterungszustand der Kreiselpumpe ist, wobei das Verhältnis der ermittelten Startenergie (W) zu einem Referenzwert ($W_{neu}$, $W_{Age}$, $W_{Warn}$) bestimmt und aus diesem Verhältnis auf den Verschleiß- oder Alterungszustand geschlossen wird.

**12.** Verfahren nach Anspruch 11, **dadurch gekennzeichnet, dass** es sich bei dem Referenzwert ($W_{neu}$) um den Wert derjenigen Startenergie (W) handelt, der bei neuen Kreiselpumpen im Auslieferungszustand vorliegt, wobei dieser Referenzwert ($W_{neu}$) werksseitig, oder bei der ersten Inbetriebnahme der Kreiselpumpe in dem hydraulischen System, oder aus mehreren Starts nach der Installation der Kreiselpumpe durch Mittelung der dabei jeweils bestimmten Startenergien (W) ermittelt worden ist.

**13.** Verfahren nach einem der Ansprüche 11 oder 12, **dadurch gekennzeichnet, dass** ab einem bestimmten Wert der Startenergie (W) oder des Verhältnisses eine Warn- oder Wartungsmeldung ($W_{Age}$, $W_{Warn}$) ausgegeben wird.

**14.** Verfahren nach einem der vorherigen Ansprüche, **dadurch gekennzeichnet, dass** die Kreiselpumpe unmittelbar nach der Anlaufphase wieder ausgeschaltet wird, wenn die Startenergie (W) innerhalb einem Erwartungsbereich liegt, der einem Normalbetrieb mit geringem Volumenstrom zugeordnet ist.

**15.** Elektromotorische Kreiselpumpe zur Förderung eines Fluids zu einem Verbraucher in einem hydraulischen System mit einer Pumpenelektronik zur Drehzahlregelung des Elektromotors, **dadurch gekennzeichnet, dass** die Pumpenelektronik eingerichtet ist, das Verfahren nach einem der Ansprüche 1 bis 14 auszuführen.

Strom I in A

Drehzahl n in U/min

Zeit in s

$I_{OL}$

$T_1$

$T_2$

Ausrichtung

A

B

dn/dt

Fig. 1

Fig. 2

EP 4 001 656 A1

Fig. 3

EP 4 001 656 A1

Fig. 4

Fig. 5

Fig. 6

Fig. 7

Fig. 8

Europäisches
Patentamt

European
Patent Office

Office européen
des brevets

# EUROPÄISCHER RECHERCHENBERICHT

**Nummer der Anmeldung**

**EP 21 20 6219**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/006927 A1 (SIEMENS AG [DE]; GRIEB HERBERT [DE] ET AL.) 15. Januar 2009 (2009-01-15) | 1-4,15 | INV. F04D15/00 F24D19/10 |
| A | * Abbildung 2 * * Seite 6, Zeile 14 – Seite 10, Zeile 5 * * Anspruch 1 * ----- | 5-14 | |
| A | DE 10 2014 004336 A1 (WILO SE [DE]) 1. Oktober 2015 (2015-10-01) * Abbildung 4 * * Absätze [0052] – [0053] * ----- | 1-15 | |

**RECHERCHIERTE SACHGEBIETE (IPC)**

F04D
F24H
F24D

Der vorliegende Recherchenbericht wurde für alle Patentansprüche erstellt

| Recherchenort | Abschlußdatum der Recherche | Prüfer |
|---|---|---|
| Den Haag | 1. April 2022 | Ingelbrecht, Peter |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 6219

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-04-2022

| Im Recherchenbericht angeführtes Patentdokument | Datum der Veröffentlichung | Mitglied(er) der Patentfamilie | Datum der Veröffentlichung |
|---|---|---|---|
| WO 2009006927 A1 | 15-01-2009 | KEINE | |
| DE 102014004336 A1 | 01-10-2015 | CN 106133327 A | 16-11-2016 |
| | | DE 102014004336 A1 | 01-10-2015 |
| | | DK 3123033 T3 | 28-10-2019 |
| | | EP 3123033 A1 | 01-02-2017 |
| | | US 2017037857 A1 | 09-02-2017 |
| | | WO 2015144310 A1 | 01-10-2015 |

EPO FORM P0461

Für nähere Einzelheiten zu diesem Anhang : siehe Amtsblatt des Europäischen Patentamts, Nr.12/82